Europäisches Patentamt

European Patent Office

Office européen des brevets

(19)

(11) **EP 1 503 349 A2**

(12) **EUROPÄISCHE PATENTANMELDUNG**

(43) Veröffentlichungstag:
**02.02.2005 Patentblatt 2005/05**

(51) Int Cl.⁷: **G07C 9/00**

(21) Anmeldenummer: **04017929.3**

(22) Anmeldetag: **29.07.2004**

(84) Benannte Vertragsstaaten:
**AT BE BG CH CY CZ DE DK EE ES FI FR GB GR
HU IE IT LI LU MC NL PL PT RO SE SI SK TR**
Benannte Erstreckungsstaaten:
**AL HR LT LV MK**

(30) Priorität: **01.08.2003 DE 10336036**

(71) Anmelder: **Fachhochschule Köln
50578 Köln (DE)**

(72) Erfinder:
• **Schmidt, André
51674 Wiehl (DE)**
• **Kampmann, Andreas
51674 Wiehl (DE)**

(74) Vertreter: **von Kreisler Selting Werner
Patentanwälte
Deichmannhaus am Dom
Bahnhofsvorplatz 1
50667 Köln (DE)**

(54) **ASK (Amplitude Shift Keying)-Signalauswertung**

(57)    Das Verfahren zur messtechnischen Bestimmung des Startzeitpunktes eines ASK-Symbols eines von einem Sender-Schwingkreis gesendeten ASK-Signals anhand des ASK-Symbols des von einer über ein magnetisches Feld mit dem Sender-Schwingkreis gekoppelten Empfänger-Schwingkreis empfangenen ASK-Signals umfasst folgende Schritte:

-    Aussenden eines mit mindestens einem aufmodulierten ASK-Symbol versehenen Trägersignals von dem eine Zeitkonstante $\tau_s$ aufweisenden Sender-Schwingkreis,
-    Empfangen des Trägersignals durch den eine Zeitkonstante $\tau_E$ aufweisenden Empfänger-Schwingkreis,
-    Ermitteln der aufklingenden Hüllkurve des empfangenen Trägersignals aus dessen Verlauf ab dem Zeitpunkt, von dem an die Amplitude des empfangenen Trägersignals einen vorgebbaren Detektionspegel überschreitet,
-    Ermitteln der charakteristischen Parameter $\tau_S$ und $\tau_E$ anhand des Verlaufs der aufklingenden Hüllkurve und
-    Bestimmen des Startzeitpunktes des gesendeten ASK-Symbols relativ zu einem zeitlich nachfolgenden Ablesezeitpunkt anhand der Parameter $\tau_S$ und $\tau_E$.

Fig.6

**Beschreibung**

Die Erfindung betrifft ein Verfahren zur messtechnischen Bestimmung des Startzeitpunktes eines ASK-Symbols eines von einem Sender-Schwingkreis gesendeten ASK-Signals anhand des ASK-Symbols des von einer über ein magnetisches Feld mit dem Sender-Schwingkreis gekoppelten Empfänger-Schwingkreis empfangenen ASK-Signals. Dieses Verfahren kann beispielsweise zur Erkennung einer ungewollten Vergrößerung der Reichweite von Funkverbindungen, insbesondere Transpondersystemen, und zur Verhinderung eines unautorisierten Zugangs zu mit funkbasierten Schlüsselsystemen gesicherten Bereichen, beispielsweise Kraftfahrzeugen, genutzt werden.

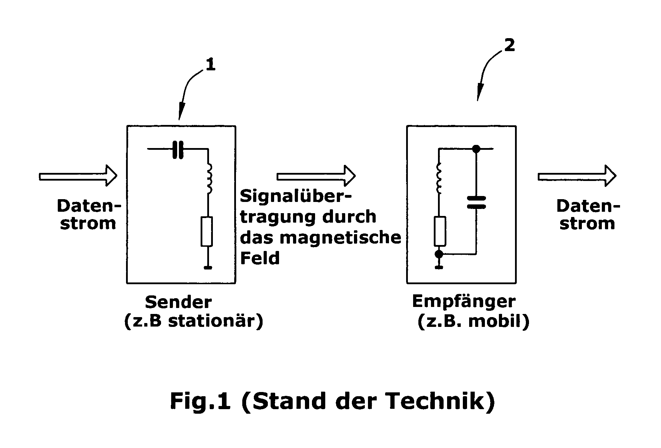

Bei zahlreichen Anwendungen von Transpondersystemen wird von einer Basisstation 1 mittels eines Senders ein Signal zum Transponder 2 gesendet und von diesem eventuell verändert und als Antwortsignal mittels eines Senders gleicher oder veränderter Frequenz zurück zur Basisstation 1 gesendet und dort empfangen. Die Basisstation 1 ist beispielsweise Bestandteil eines mit einer verschließbaren Öffnung versehenen Objekts, beispielsweise eines Fahrzeuges, während der Transponder 2 von einer zugangsberechtigten Person (im Falle eines Fahrzeuges beispielsweise dem Fahrer) mitgeführt wird. Fig. 1 zeigt einen einzelnen Übertragungskanal eines Transpondersystems; der Rückübertragungskanal vom Empfänger zum Sender ist in Fig. 1 nicht eingezeichnet.

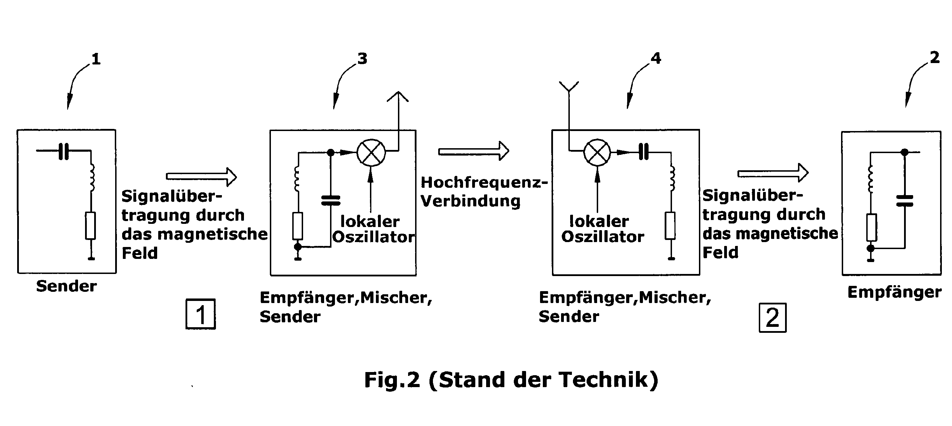

Üblicherweise ist die Reichweite von drahtlosen Kommunikationssystemen durch die Sendeleistung und die Funkfelddämpfung bzw. das sich daraus ergebende Signal-zu-Rausch-Verhältnis im Empfänger begrenzt. Eine ungewollte oder unautorisierte Erhöhung der Reichweite kann beispielsweise dadurch erfolgen, dass ein zur Frequenz des Transponders passender Empfänger, Frequenzumsetzer oder Sender 2 sowie spiegelbildlich ein zur Frequenz des Empfängers passender Empfänger, Frequenzumsetzer und Sender 4 in den Übertragungsweg eingeschaltet wird. Diese Situation ist in Fig. 2 gezeigt. Durch eine derartige Manipulation (auch Relais-Attacke genannt) können die Basisstation 1 und der Transponder 2 miteinander in Kontakt treten, ohne dass die Übertragungsdistanz, wie vom Konstrukteur beabsichtigt, beschränkt ist. Dies führt insbesondere bei distanzbegrenzten Krypt-Transponder-Anwendungen, wie beispielsweise keyless-go oder keyless-car Systemen zu einem Sicherheitsrisiko.

Bei funkbasierten Schlüsselsystemen wird zwischen aktiven und passiven Zugangssystemen unterschieden. Passive Zugangssysteme sind dadurch gekennzeichnet, dass der Identifikationsgeber, also der Transponder, ohne aktives Handeln des Identifikationsbesitzers von der Basisstation abgefragt werden kann. Solche Systeme sind beispielsweise in DE-A-199 01 364 und DE-C-198 39 696 beschrieben. Diese beiden bekannten Systeme enthalten jedoch keine Schutzeinrichtungen gegen die oben beschriebene Relais-Attacke.

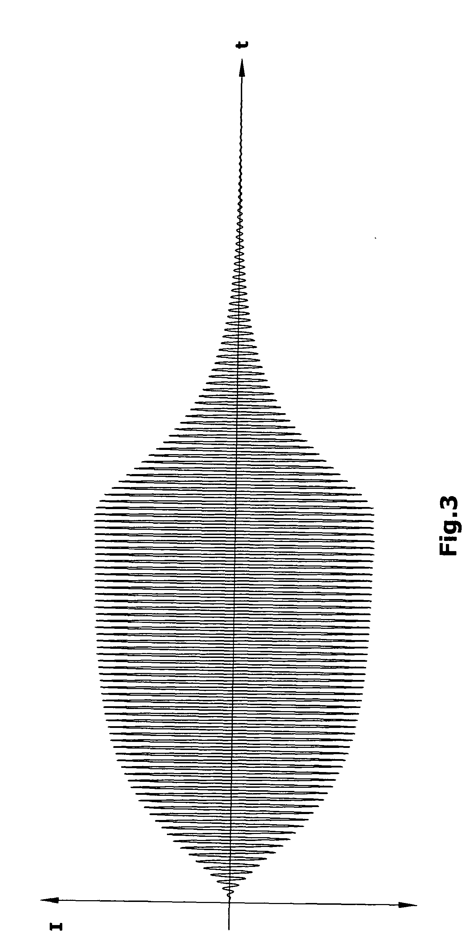

Die bisher gebräuchlichste Modulationsart für Transpondersysteme ist die Amplitude-Shift-Keying (ASK-)Modulation. Mit dieser Modulationsart lassen sich auf einem Trägersignal durch Amplitudenänderungen (digitale) Informationen übertragen. Der Amplitudenhub für die Modulation ist dabei grundsätzlich beliebig. Anders als bei der Modulation eines hochfrequenten Trägers mit einem analogen Signal kommt es bei der Übertragung digitaler Informationen darauf an, einzelne Symbole (also einzelne Bits bzw. kleine Bitworte) zu übertragen. Entsprechend zur Amplitudenmodulation kann man Symbole durch entsprechende Amplitudenänderungen dem HF-Trägersignal aufmodulieren. In der Transpondertechnik nutzt man letztendlich zwei Möglichkeiten, nämlich zum einen eine kleine Amplitudenänderung (typischerweise 10 %), um die Reichweite nur wenig einzuschränken, und zum anderen das zeitweise vollständige Abschalten des HF-Trägersignals. Von dieser zweiten Möglichkeit wird bei der ASK-Modulation Gebrauch gemacht. Der Verlauf des Trägersignals innerhalb eines ASK-Symbols und dessen Hüllkurve sind in Fig. 3 beispielhaft gezeigt.

Aus den Standard-Verfahren der HF-Technik zur Detektion der Übertragungszeit ist die Auswertung der Phaseninformation bekannt (siehe hier beispielsweise die bereits oben angegebene DE-C-198 39 692 und DE-A-100 54 180). Wenn man die Grundgedanken dieser Verfahren auf Transpondersysteme niedrigerer Frequenz überträgt, entsteht das Problem, die Laufzeit der Information, also die Laufzeit der ASK-Symbole, und nicht die Laufzeit des Trägersignals zu messen. Hierbei ist es erforderlich, auf der Empfängerseite, also transponderseitig, den (virtuellen) Sendezeitpunkt für ein Symbol (beispielsweise ein ASK-Symbol) exakt bestimmen zu müssen. Um diesen Zeitpunkt wiederum hinreichend genau lokalisieren zu können, muss er eindeutig einer Halbwelle des hochfrequenten Trägersignals zugeordnet werden. Es ist bislang kein Verfahren bekannt, das es erlaubt, den potentiellen Sendezeitpunkt eines ASK-Symbols anhand des empfangenen ASK-Symbols genau zu bestimmen.

Aufgabe der Erfindung ist es, ein Verfahren anzugeben, das es erlaubt, anhand eines empfangenen, durch Amplitudenmodulation erzeugten Symbols (beispielsweise ASK-Symbols) eines Trägersignals den potentiellen Sendezeitpunkt dieses Symbols zu bestimmen.

Zur Lösung dieser Aufgabe wird mit der Erfindung ein Verfahren zur messtechnischen Bestimmung des Startzeitpunktes eines ASK-Symbols eines von einem Sender-Schwingkreis gesendeten ASK-Signals anhand des ASK-Symbols des von einer über ein magnetisches Feld mit dem Sender-Schwingkreis gekoppelten Empfänger-Schwingkreis empfangenen ASK-Signals vorgeschlagen, wobei das Verfahren die folgenden Schritte aufweist:

- Aussenden eines mit mindestens einem aufmodulierten ASK-Symbol versehenen Trägersignals von dem eine Zeitkonstante $\tau_S$ aufweisenden Sender-Schwingkreis,
- Empfangen des Trägersignals durch den eine Zeitkonstante $\tau_E$ aufweisenden Empfänger-Schwingkreis,
- Ermitteln der aufklingenden Hüllkurve des empfangenen Trägersignals aus dessen Verlauf ab dem Zeitpunkt, von dem an die Amplitude des empfangenen Trägersignals einen vorgebbaren Detektionspegel überschreitet,
- Ermitteln der charakteristischen Parameter $\tau_S$ und $\tau_E$ anhand des Verlaufs der aufklingenden Hüllkurve und
- Bestimmen des Startzeitpunktes des gesendeten ASK-Symbols relativ zu einem zeitlich nachfolgenden Ablesezeitpunkt, und zwar entweder anhand der Parameter $\tau_S$ und $\tau_E$ oder direkt aus der bei der Ermittlung von $\tau_S$ und $\tau_E$ konstruierten Vergleichs-Hüllkurve.

Nach der Erfindung ist vorgesehen, am Empfängerort anhand eines empfangenen Symbols des Trägersignals den Sendezeitpunkt dieses Symbols zu ermitteln. Dazu werden die Spitzenwerte des sinusförmigen Trägersignals fortlaufend bestimmt und gespeichert. Aber erst beim Überschreiten eines bestimmten Mindestpegels wird der Auswertevorgang ausgelöst. Der Auswertevorgang ermittelt gleichzeitig die Zeitkonstanten $\tau_S$ und $\tau_E$ wie auch einen optimal an den Kurvenverlauf der Messung angepassten Verlauf der Funktion, die sich aus dem Faltungsintegral ergibt. Hierbei kann man sich bekannter Extraktionsverfahren bedienen, wie beispielsweise dem Least-Square-Fit oder der Verwendung eines Beobachters in einem Regelkreis. Aus der optimal angepassten Funktion des Faltungsintegrals lässt sich nun der Startzeitpunkt des ASK-Symbols relativ zu einem zeitlich nachfolgenden Ablesezeitpunkt bestimmen.

Auch auf Seiten des Senders wird die Zeitdifferenz zwischen dem Startzeitpunkt eines ASK-Symbols und dem Ablesezeitpunkt ermittelt. Verfügen sowohl der Sender als auch der Empfänger über hinreichend synchrone Taktgeber, so lässt sich senderseitig die Zeitdifferenz zwischen dem Startzeitpunkt des gesendeten ASK-Symbols und dem Ablesezeitpunkt wie auch empfängerseitig die Zeitdifferenz zwischen dem Startzeitpunkt des gesendeten ASK-Symbols und dem Ablesezeitpunkt ermitteln. Ein Vergleich der beiden Zeitdifferenzen gibt Aufschluss darüber, ob in den Kommunikationsablauf zwischen Sender und Empfänger weitere Komponenten eingefügt worden sind, etwa zur Veränderung der Reichweite. Diese Information kann applikationsabhängig ausgewertet werden, um beispielsweise den Zugang zu einem Objekt zu verweigern.

Es kann zweckmäßig sein, den Verlauf der aufklingende Hüllkurve bis zu ihrem Nulldurchgang abzuschätzen, um anhand der sich so ergebenden aufklingenden "Gesamt-Hüllkurve" die Parameter $\tau_S$ und $\tau_E$ zu ermitteln.

In vorteilhafter Weiterbildung der Erfindung ist vorgesehen, die Bestimmung des (virtuellen) Startzeitpunktes des empfangenen ASK-Symbols noch weiter dadurch zu erhöhen, dass man ausgehend von einem dem Startzeitpunkt des empfangenen ASK-Symbols nachfolgenden Nulldurchgang des empfangenen Trägersignals durch wiederholte Subtraktion der bekannten Periodendauer des Trägersignals der (virtuelle) Startzeitpunkt des empfangenen ASK-Symbols bestimmt wird.

Das zuvor beschriebene Verfahren lässt sich nicht nur auf die aufklingende Hüllkurve eines empfangenen ASK-Symbols anwenden. Ganz entsprechend ist die Erfindung demzufolge auch auf abklingende Hüllkurven empfangener Trägersignale bzw. ASK-Symbole anzuwenden. Hierbei verfährt man wie folgt:

- Aussenden eines mit mindestens einem aufmodulierten ASK-Symbol versehenen Trägersignals von dem eine Zeitkonstante $\tau_S$ aufweisenden Sender-Schwingkreis,
- Empfangen des Trägersignals durch den eine Zeitkonstante $\tau_E$ aufweisenden Empfänger-Schwingkreis,
- Ermitteln der abklingenden Hüllkurve des empfangenen Trägersignals aus dessen Verlauf bis zu dem Zeitpunkt, ab dem die Amplitude des empfangenen Trägersignals einen vorgebbaren Detektionspegel unterschreitet,
- Ermitteln der charakteristischen Parameter $\tau_S$ und $\tau_E$ anhand des Verlaufs der abklingenden Hüllkurve und
- Bestimmen des Endezeitpunktes des gesendeten ASK-Symbols relativ zu einem zeitlich nachfolgenden Ablesezeitpunkt anhand der Parameter $\tau_S$ und $\tau_E$, und zwar entweder anhand der Parameter $\tau_S$ und $\tau_E$ oder direkt aus der bei der Ermittelung von $\tau_S$ und $\tau_E$ konstruierten Vergleichs-Hüllkurve.

Die weiter oben bereits angesprochene Erhöhung der Genauigkeit der Bestimmung des virtuellen Startzeitpunktes des empfangenen ASK-Symbols wird bei der zuvor beschriebenen Variante der Erfindung, die die Untersuchung der abklingenden Hüllkurve betrifft, dadurch realisiert, dass ausgehend von einem dem Endezeitpunkt des empfangenen ASK-Symbols vorangehenden Nulldurchgang des empfangenen Trägersignals durch wiederholte Addition der Periodendauer des Trägersignals der virtuelle Endezeitpunkt des empfangenen ASK-Symbols bestimmt wird.

Nachdem gemäß dem erfindungsgemäßen Verfahren die charakteristischen Parameter, nämlich die Zeitkonstanten $\tau_S$ und $\tau_E$ des Sender- und des Empfänger-Schwingkreises ermittelt werden, können diese Parameter auch zu anderen Auswertungszwecken insbesondere auch außerhalb des Empfängers genutzt werden. In diesem Zusammenhang sei erwähnt, dass diese Auswertung beispielsweise zum Zwecke eines Plausibilitätschecks für Sicherheitsanwendungen erfolgen kann.

Eine für alle denkbaren Anwendungsfälle ausreichende Genauigkeit des Verfahrens lässt sich mit einem zweistufigen Prozess erreichen. In einem ersten Bearbeitungsschritt (1) wird der virtuelle Sendezeitpunkt des ASK-Signals mit einer Auflösung bestimmt, die eine sichere Zuordnung zu einer Halbwelle der Trägerfrequenz erlaubt, also zum Intervall zwischen 0 und $A_0 \times \pi$ (mit z.B. $A_0 < 0,8$) (siehe Anspruch 1 bzw. 3). In einem weiteren Bearbeitungsschritt (2) kann dann mit Standard-Methoden zur Messung der Phase des HF-Trägers (z.B. Nulldurchgangsdetektion) der entsprechende Zeitpunkt (z.B. des Nulldurchgangs) gemessen und durch das Ergebnis aus Schritt (1) absolut zugeordnet werden (siehe Anspruch 2 bzw. 4). Damit liegt dann ein sehr genaues Messergebnis vor.

Die Vorteile des erfindungsgemäßen Verfahrens sind insbesondere in den nachfolgend aufgeführten Eigenschaften zu sehen.

1. Am Empfangsort kann aus der entsprechenden Sequenz von empfangenen ASK-Symbolen der jeweilige (virtuelle) Sendezeitpunkt jedes ASK-Symbols bestimmt werden.

2. Das Verfahren kann angewendet werden für eine Übertragung mit ASK-Symbolen, die in Form eines Datenstroms oder in Form von Frames organisiert sind.

3. Das erfindungsgemäße Verfahren erfordert keine Änderung des Transpondersystem-Übertragungsprotokolls. Damit kann das erfindungsgemäße Verfahren auf bereits existierende anwendungsspezifische Übertragungsprotokolle (ohne diese ändern zu müssen) angewendet werden.

4. Ferner ist es von Vorteil, dass das erfindungsgemäße Verfahren unabhängig von zeitlichen Ausdehnungen der ASK-Symbole ist.

5. Das erfindungsgemäße Verfahren kann auch angewendet werden, wenn die ASK-Modulation kein vollständiges An- und Abschalten des Trägersignals, sondern nur einen Amplitudenwechsel verwendet (z.B. 50%-ASK).

6. Ferner ist anzumerken, dass das erfindungsgemäße Verfahren von einer weiteren ASK-Modulation (z.B. 10 %-ASK) im weiteren Verlauf des Symbols unabhängig ist, da eine solche weitere ASK-Modulation die Bestimmung des Start- bzw. Endezeitpunktes des gesendeten ASK-Symbols nicht beeinträchtigt, wenn die weitere ASK-Modulation erst nach Aufklingen aktiv bzw. rechtzeitig vor dem Abklingen inaktiv wird.

7. Ferner ist es von Vorteil, dass das erfindungsgemäße Verfahren außerhalb des Empfängers keine weiteren Komponenten benötigt.

8. Schließlich kann das erfindungsgemäße Verfahren im Übertragungsablauf nicht detektiert werden, was Schutz vor Manipulationen und vor dem Aufdecken der Anwendung des erfindungsgemäßen Verfahrens bei einem Transpondersystem bietet.

9. Das erfindungsgemäße Verfahren lässt sich bei Transpondersystemen mit Sendestärken von 1 μW bis 1 W und in einem Frequenzband von 50 kHz bis 1 GHz und insbesondere zwischen 125 kHz bis 13,56 MHz bzw. 433 MHz betreiben, wobei der Sender- und der Empfänger-Schwingkreis im 20 dB-Fenster um den Resonanzpunkt betrieben werden kann.

10. Durch Versuche und Simulationen hat sich herausgestellt, dass der (virtuelle) Sendezeitpunkt eines ASK-Symbols, das von einem Empfänger empfangen wird, mit einer Genauigkeit von $< 0,8 \times \pi$ zugeordnet werden kann.

Die Erfindung wird nachfolgend unter Bezugnahme auf die Zeichnung näher erläutert. Im einzelnen zeigen dabei:

Fig. 1      eine Prinzipdarstellung von Sender und Empfänger mit Übertragungsweg eines bekannten Transpondersystems,

Fig. 2      das Transpondersystem gemäß Fig. 1 mit Manipulation durch eine Relais-Attacke nach dem Stand der Technik,

Fig. 3      den Zeitverlauf eines empfangenen ASK-Signals,

Fig. 4      schematisch den Verlauf von aufklingenden Hüllkurven auf Seiten des Senders und des Empfängers, die die Übertragung eines ASK-Symbols ab dessen Startzeitpunkt zeigen,

Fig. 5      den Verlauf der in Fig. 4 gezeichneten Spannungen $V_{IN}$ und $V_C$,

Fig. 6      eine schematische Darstellung zur Erläuterung der Auswertung der aufklingenden Hüllkurve,

Fig. 7      schematisch den Verlauf von abklingenden Hüllkurven auf Seiten des Senders und des Empfängers, die die Übertragung eines ASK-Symbols vor dem Endezeitpunkt zeigen,

Fig. 8      eine schematische Darstellung zur Erläuterung der Auswertung der abklingenden Hüllkurve,

Fig. 9      ein Blockschaltbild einer möglichen Hardware-Realisierung des Verfahrens und

Fig. 10     eine prinzipielle Darstellung der Hauptkomponenten von Sender und Empfänger eines Transpondersystems, das sich des erfindungsgemäßen Verfahrens bedient.

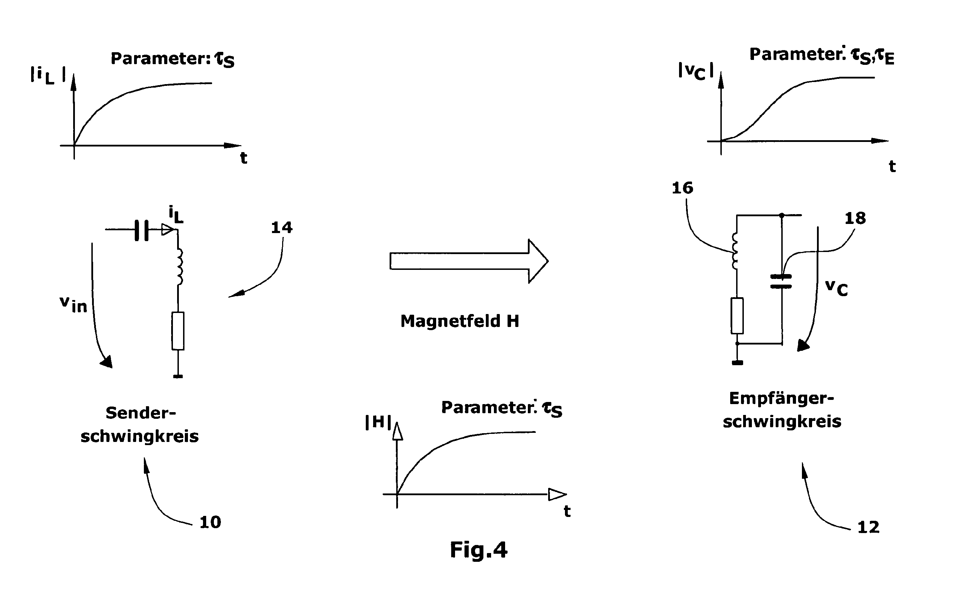

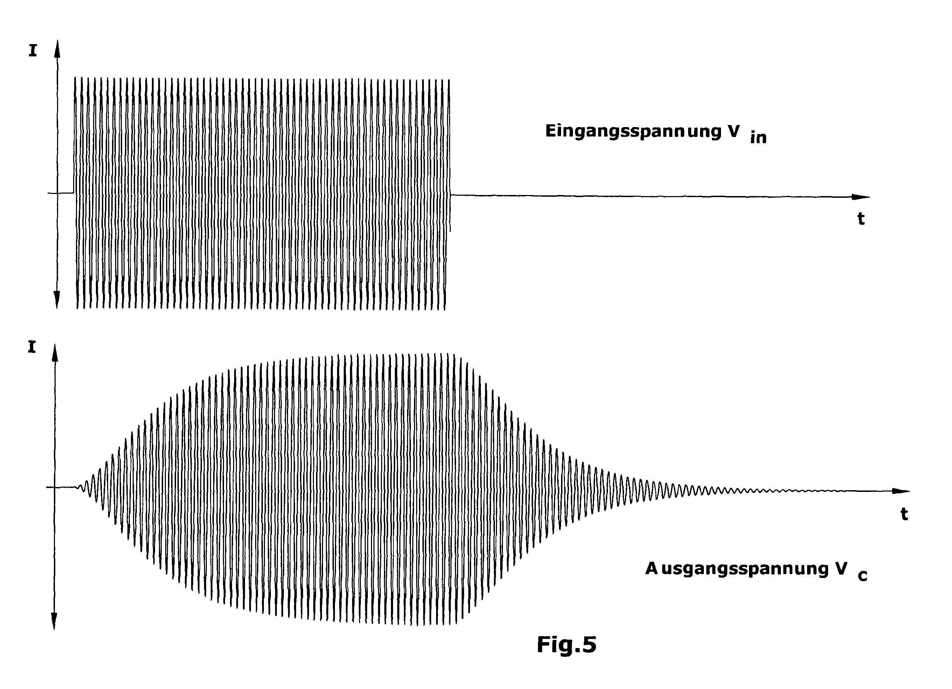

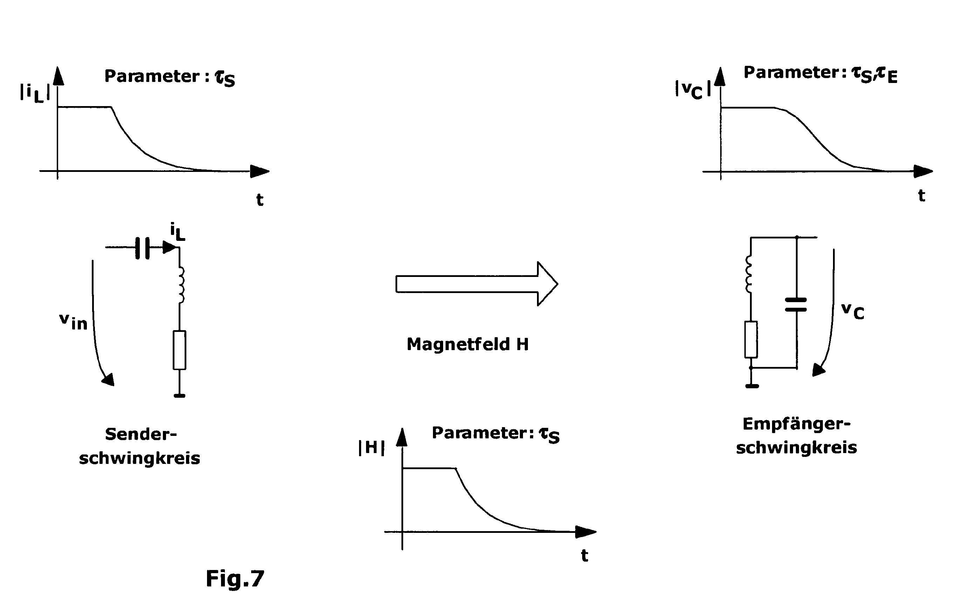

Die dem erfindungsgemäßen Verfahren zu Grunde liegenden physikalischen Zusammenhänge sind in den Fign. 4 und 7 dargestellt, wobei Fig. 4 das Aufklingverhalten eines mit einem ASK-Symbol versehenen HF-Trägersignals, also den Verlauf der Hüllkurve nach dem Startzeitpunkt der Aussendung des ASK-Symbols zeigt, während Fig. 7 das Abklingverhalten, also den Verlauf der Hüllkurven bis zum Endezeitpunkt der Übertragung des ASK-Symbols zeigt. Fig. 5 zeigt den Verlauf der in Fig. 4 kenntlich gemachten Spannungen $V_{IN}$ am Eingang eines Sender-Schwingkreises 10 einer beispielsweise Basisstation und des Ausgangssignals $V_C$ am Ausgang eines Empfänger-Schwingkreises 12 einer beispielsweise mobilen Station (z.B. Transponder).

Beim Einschalten der Trägerfrequenz-Wechselspannung am Sender-Schwingkreis 10 klingt der Strom $i_L$ durch die Sendespule 14 entsprechend der Formel $[1-\exp(-t/\tau_S)]$ auf, wie es in Fig. 4 oben links gezeigt ist. $\tau_S$ ist die Zeitkonstante, die den Aufklingvorgang des Spulenstroms $i_L$ charakterisiert. Da das übertragende magnetische Feld proportional dem Spulenstrom $i_L$ ist, klingt die Maximalamplitude des magnetischen Feldes auch entsprechend dieser Formel auf. Dies ist in Fig. 4 in der Mitte unten grafisch gezeigt.

Die Maximalwerte (Hüllkurve) der induzierten Spannung in der Empfangsspule 16 des Empfänger-Schwingkreises gehorchen (gehorcht) auch dieser Formel, was zu einem etwas verzögerten Aufklingen der Spannung an der Schwingkreiskapazität 18 führt:

$$\max(|V_C|) \sim [1 - \exp(-t/\tau_S)] * [1-\exp(-t/\tau_E)],$$

wobei $*$ die Faltung kennzeichnen soll und $\tau_E$ die Zeitkonstante ist, die das Aufklingverhalten des Empfänger-Schwingkreises 12 charakterisiert.

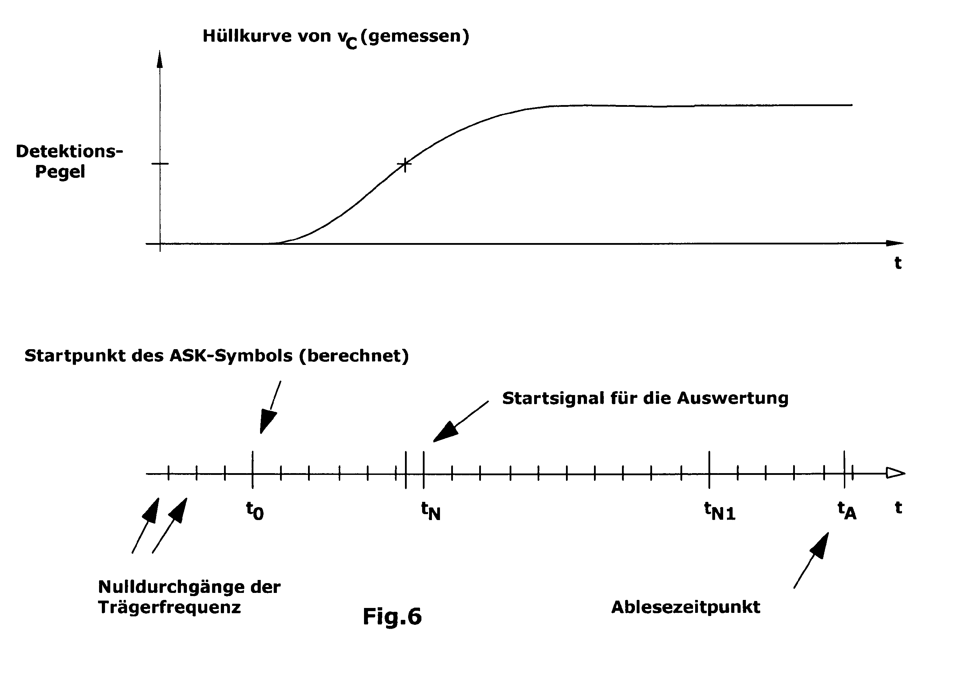

In Kenntnis dieser Zusammenhänge kann anhand des Zeitverlaufs der Ausgangsspannung des Empfänger-Schwingkreises 12 der Zeitpunkt bestimmt werden, an dem die Spannung am Sender-Schwingkreis 10 eingeschaltet wurde (virtueller Startzeitpunkt), also der Zeitpunkt $t_0$ (siehe Fig. 6), an dem begonnen wurde, ein ASK-Symbol zu übertragen.

Um definierte Bedingungen innerhalb des Messvorganges zu schaffen, wird die maximale Amplitude des Empfängersignals auf einen vorgegebenen Wert eingestellt.

Die einzelnen nach dem erfindungsgemäßen Verfahren durchzuführenden Schritte stellen sich nun wie folgt dar (siehe hierzu auch Fig. 6).

     1. In beispielsweise einem Speicher wird fortlaufend die Hüllkurve des empfangenen Signals gespeichert und nach einer Zeitspanne $\tau_E$ wieder überschrieben.

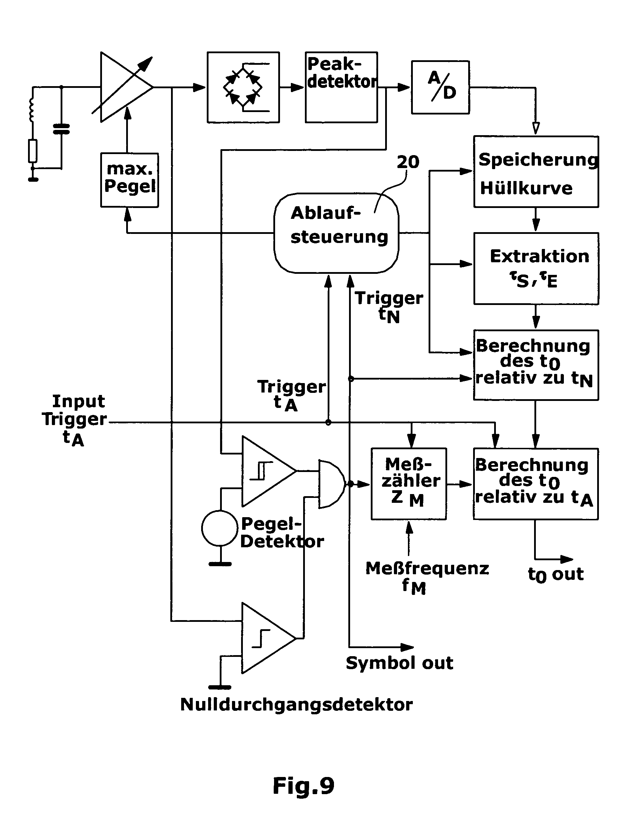

     2. Sobald durch einen Pegeldetektor ein ASK-Symbol erkannt wird (Fig. 6, Zeitpunkt $t_N$), bleibt der zu Anfang mitgeschriebene Teil der Hüllkurve erhalten und wird zur vollständigen Messung des Aufklingvorgangs ergänzt. Die Zeitkonstanten $\tau_S$ und $\tau_E$ werden dann solange verändert, bis die aus dem Faltungsintegral bestimmte Funktion optimal mit dem gemessenen Aufklingvorgang übereinstimmt. Die Zeitmarke $t_N$ des Pegeldetektors ist mit einem Nulldurchgang des hochfrequenten Trägersignals synchronisiert. Mit diesem Signal startet ein Messzähler $Z_M$, der mit einer relativ hochfrequenten Messfrequenz $f_M$ betrieben wird (siehe hierzu auch die Hardware-Realisierung gemäß Fig. 9).

     3. Mit der Kenntnis von $\tau_S$ und $\tau_E$ kann für die vorliegende Hüllkurve der jeweilige Startzeitpunkt $t_0$ berechnet werden (mit der Auflösung der Messfrequenz $f_M$).

     4. Zum Ablesezeitpunkt $t_A$ wird der Zählerstand des Messzählers $Z_M$ abgelesen und die Zeitspanne ($t_N$ - $t_0$) addiert. Damit ist der Startzeitpunkt $t_0$ des ASK-Symbols bereits recht genau bestimmt.

Die zuvor genannten Schritte lassen sich beispielsweise mit einer Schaltung realisieren, deren Blockschaltbild in Fig. 9 dargestellt ist.

Eine zentrale Ablaufsteuerung 20 der Schaltung gemäß Blockschaltbild nach Fig. 9 reagiert neben einem (nicht eingezeichneten) Signal zur allgemeinen Bereitschaft insbesondere auf die Signale, die die Zeitpunkte $t_N$ und $t_A$ markieren. Die Funktion der anderen in Fig. 9 gezeigten Komponenten und Funktionsblöcke ergeben sich unmittelbar aus dem geschilderten Ablauf des Verfahrens.

Alternativ zum geschilderten Ablauf und zur Implementierung nach Fig. 9 ist eine Anordnung denkbar, die mit eine Messwertaufnahme einen Zeitcode mit aufzeichnet und diese Daten auf den Bezugszeitpunkt $t_A$ umrechnet.

Unabhängig von bzw. in Ergänzung zu dem geschilderten Verfahren kann zu einem späteren Zeitpunkt, wenn die Amplitude maximal ist, ein weiterer ausgezeichneter Zeitpunkt (z.B. ein Nulldurchgang $t_{N1}$ - siehe Fig. 6) auf dem hochfrequenten Trägersignal für die präzise Bestimmung der Verzögerung vermessen und damit ein noch genaueres Ergebnis erzielt werden. Diese Phasenmessung benötigt das Verfahren für die Bestimmung der Absolutzeit, denn eine Messung z.B. der Nulldurchgänge lässt nur eine Zuordnung innerhalb einer halben Periode des hochfrequenten Trägersignals zu.

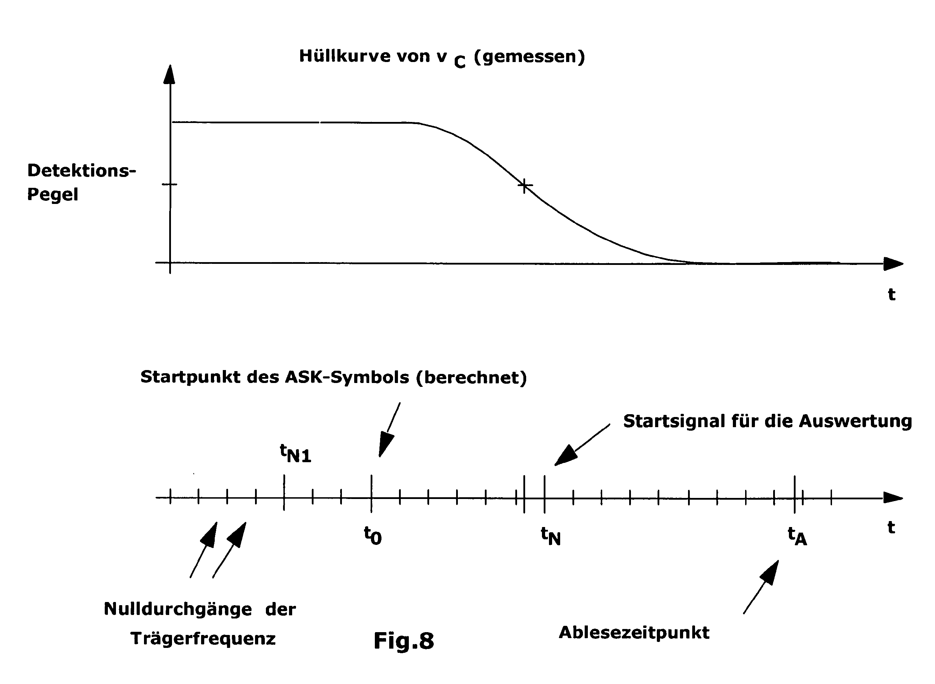

In den Fign. 7 und 8 ist die Situation dargestellt, dass das Verfahren Anwendung auf die abklingende Hüllkurve eines empfangenen ASK-Symbols findet. Die zuvor genannten Überlegungen gelten hier entsprechend.

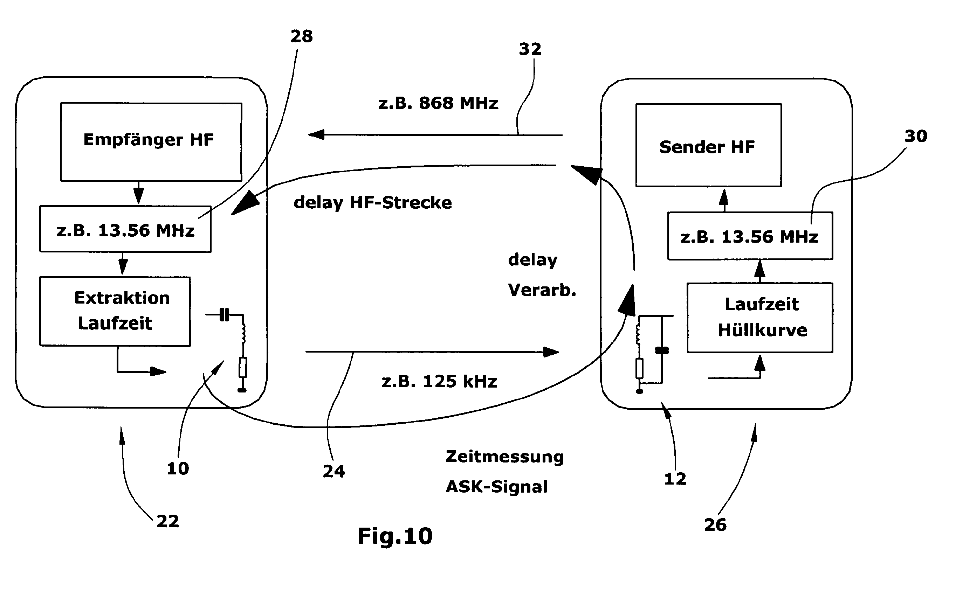

Fig. 10 zeigt ebenfalls schematisch den Aufbau der beispielsweise Basisstation und der mobilen Station eines Transpondersystems, bei dem die Erfindung Anwendung findet. Der Startzeitpunkt (bzw. der Endezeitpunkt) eines ASK-Symbols kann in der Basisstation 22 als Ein- bzw. Ausschaltzeitpunkt des Trägerfrequenzsignals ermittelt werden. Nach Übertragung des ASK-Symbols über einen ersten Kanal 24 (z.B. 125 kHz) wird anhand der Hüllkurve des gesendeten ASK-Symbols in der mobilen Station 26 nach dem oben beschriebenen Verfahren der (virtuelle) Startzeitpunkt (Endezeitpunkt) des gesendeten ASK-Symbols bestimmt. Die Zählerstände zweier Zähler 28,30 in den Stationen 22 und 26, die die jeweils ermittelten Startbzw. Endezeitpunkte wiedergeben werden miteinander verglichen, wozu der Zählerstand der Station 26 über einen zweiten Kanal 32 der Basisstation 22 "gemeldet" wird. Weichen die beiden ermittelten Startzeitpunkt bzw. Endezeitpunkte um mehr als ein vorgebbares zulässiges Maß voneinander ab, liegt eine Manipulation bzw. ein nicht erwarteter Zustand vor, der applikationsabhängig ausgewertet werden kann, indem beispielsweise der Zugang zu einem Objekt wie beispielsweise einem Fahrzeug verhindert wird.

**Patentansprüche**

1.  Verfahren zur messtechnischen Bestimmung des Startzeitpunktes eines ASK-Symbols eines von einem Sender-Schwingkreis gesendeten ASK-Signals anhand des ASK-Symbols des von einer über ein magnetisches Feld mit dem Sender-Schwingkreis gekoppelten Empfänger-Schwingkreis empfangenen ASK-Signals, mit den folgenden Schritten:

    -   Aussenden eines mit mindestens einem aufmodulierten ASK-Symbol versehenen Trägersignals von dem eine Zeitkonstante $\tau_S$ aufweisenden Sender-Schwingkreis,
    -   Empfangen des Trägersignals durch den eine

Zeitkonstante $\tau_E$ aufweisenden Empfänger-Schwingkreis,
    -   Ermitteln des Verlaufs der aufklingenden Hüllkurve des empfangenen Trägersignals aus dessen Verlauf ab dem Zeitpunkt, von dem an die Amplitude des empfangenen Trägersignals einen vorgebbaren Detektionspegel überschreitet,
    -   Ermitteln der charakteristischen Parameter $\tau_S$ und $\tau_E$ anhand des Verlaufs der aufklingenden Hüllkurve und
    -   Bestimmen des Startzeitpunktes des gesendeten ASK-Symbols relativ zu einem zeitlich nachfolgenden Ablesezeitpunkt anhand der Parameter $\tau_S$ und $\tau_E$.

2.  Verfahren nach Anspruch 1, **dadurch gekennzeichnet, dass** der Nulldurchgang der aufklingenden Hüllkurve relativ zu einem zeitlich nachfolgenden Ablesezeitpunkt anhand des Verlaufs der aufklingenden Hüllkurve ab dem Zeitpunkt, von dem an die Amplitude des empfangenen Trägersignals den vorgebbaren Detektionspegel überschreitet, abgeschätzt wird und dass die charakteristischen Parameter $\tau_S$ und $\tau_E$ anhand der sich unter Zuhilfenahme der Abschätzung ergebenden aufklingenden Hüllkurve ermittelt werden.

3.  Verfahren nach Anspruch 1 oder 2, **dadurch gekennzeichnet,**

    -   **dass** die Periodendauer des empfangenen Trägersignals ermittelt wird und
    -   **dass** ausgehend von einem dem Startzeitpunkt des empfangenen ASK-Symbols nachfolgenden Nulldurchgang des empfangenen Trägersignals durch wiederholte Subtraktion der Periodendauer der Startzeitpunkt des gesendeten ASK-Symbols bestimmt wird.

4.  Verfahren zur messtechnischen Bestimmung des Endezeitpunktes eines ASK-Symbols eines von einem Sender-Schwingkreis gesendeten ASK-Signals anhand des ASK-Symbols des von einer über ein magnetisches Feld mit dem Sender-Schwingkreis gekoppelten Empfänger-Schwingkreis empfangenen ASK-Signals, mit den folgenden Schritten:

    -   Aussenden eines mit mindestens einem aufmodulierten ASK-Symbol versehenen Trägersignals von dem eine Zeitkonstante $\tau_S$ aufweisenden Sender-Schwingkreis,
    -   Empfangen des Trägersignals durch den eine Zeitkonstante $\tau_E$ aufweisenden Empfänger-Schwingkreis,
    -   Ermitteln der abklingenden Hüllkurve des empfangenen Trägersignals aus dessen Verlauf bis zu dem Zeitpunkt, ab dem die Amplitude des empfangenen Trägersignals einen vorgebbaren Detektionspegel unterschreitet,

- Ermitteln der charakteristischen Parameter $\tau_S$ und $\tau_E$ anhand des Verlaufs der abklingenden Hüllkurve und

- Bestimmen des Endezeitpunktes des gesendeten ASK-Symbols relativ zu einem zeitlich nachfolgenden Ablesezeitpunkt anhand der Parameter $\tau_S$ und $\tau_E$.

5. Verfahren nach Anspruch 4, **dadurch gekennzeichnet, dass** der Nulldurchgang der abklingenden Hüllkurve relativ zu einem zeitlich nachfolgenden Ablesezeitpunkt anhand des Verlaufs der abklingenden Hüllkurve bis zu dem Zeitpunkt, ab dem die Amplitude des empfangenen Trägersignals den vorgebbaren Detektionspegel unterschreitet, abgeschätzt wird und dass die charakteristischen Parameter $\tau_S$ und $\tau_E$ anhand der sich unter Zuhilfenahme der Abschätzung ergebenden abklingenden Hüllkurve ermittelt werden.

6. Verfahren nach Anspruch 4 oder 5, **dadurch gekennzeichnet,**

- **dass** die Periodendauer des empfangenen Trägersignals ermittelt wird und

- **dass** ausgehend von einem dem Endezeitpunkt des empfangenen ASK-Symbols vorangehenden Nulldurchgang des empfangenen Trägersignals durch wiederholte Addition der Periodendauer der Endezeitpunkt des gesendeten ASK-Symbols bestimmt wird.

7. Verfahren nach einem der Ansprüche 1 bis 6, **dadurch gekennzeichnet, dass** der Modulationshub der ASK-Symbole 100 % oder weniger, beispielsweise bis zu lediglich 10 %, beträgt.

8. Verfahren nach einem der Ansprüche 1 bis 7, **dadurch gekennzeichnet, dass** die Parameter $\tau_S$ und $\tau_E$ insbesondere außerhalb eines den Empfänger-Schwingkreis aufweisenden Empfängers einer weiteren Auswertung unterzogen werden.

9. Verwendung des Verfahrens nach einem der vorhergehenden Ansprüche zur Detektion einer ungewollten Vergrößerung der Reichweite von Transponderverbindungen beispielsweise in keyless-go und insbesondere keyless-car Applikationen.

**1**

**2**

Datenstrom

Signalübertragung durch
das magnetische
Feld

Datenstrom

Sender
(z.B stationär)

Empfänger
(z.B. mobil)

# Fig.1 (Stand der Technik)

**1**

**Sender**

Signalübertragung durch
das magnetische
Feld

1

**3**

lokaler
Oszillator

**Empfänger,Mischer,
Sender**

Hochfrequenz-
Verbindung

**4**

lokaler
Oszillator

**Empfänger,Mischer,
Sender**

Signalübertragung durch
das magnetische
Feld

2

**2**

**Empfänger**

**Fig.2 (Stand der Technik)**

EP 1 503 349 A2

Fig.3

Parameter: $\tau_S$

$|i_L|$

t

$i_L$

14

$v_{in}$

Sender-schwingkreis

10

Magnetfeld H

$|H|$

Parameter: $\tau_S$

t

Fig.4

Parameter: $\tau_S, \tau_E$

$|v_C|$

t

16

18

$v_C$

Empfänger-schwingkreis

12

EP 1 503 349 A2

Eingangsspannung $V_{in}$

Ausgangsspannung $V_c$

Fig.5

Hüllkurve von $v_C$ (gemessen)

Detektions-Pegel

$t$

Startpunkt des ASK-Symbols (berechnet)

Startsignal für die Auswertung

$t_0$ $t_N$ $t_{N1}$ $t_A$

$t$

Nulldurchgänge der Trägerfrequenz

Ablesezeitpunkt

Fig.6

Parameter : $\tau_S$

$|i_L|$

t

$i_L$

$v_{in}$

Sender-
schwingkreis

Magnetfeld H

Parameter : $\tau_S$

$|H|$

t

Parameter: $\tau_S, \tau_E$

$|v_C|$

t

$v_C$

Empfänger-
schwingkreis

Fig.7

EP 1 503 349 A2

Hüllkurve von v $_C$ (gemessen)

Detektions-
Pegel

t

EP 1 503 349 A2

Startpunkt des ASK-Symbols (berechnet)

Startsignal für die Auswertung

$t_{N1}$

$t_0$

$t_N$

$t_A$

t

Nulldurchgänge der
Trägerfrequenz

Fig.8

Ablesezeitpunkt

**Fig.9**

Fig.10